# FASCICULE DE BREVET EUROPEEN

(11) **EP 3 416 302 B1**
(45) Date de publication et mention de la délivrance du brevet: **22.07.2020**
(21) Numéro de dépôt: 18176814.4
(22) Date de dépôt: 08.06.2018
(51) Int. Cl.: H04B 7/185

(54) **SYSTEME DE TELECOMMUNICATIONS COMPRENANT UN SERVEUR DE CACHE EMBARQUE DANS UNE PLATEFORME A HAUTE ALTITUDE ET PROCEDE DE TRANSMISSION DE DONNEES ASSOCIE**
TELEKOMMUNIKATIONSSYSTEM, DAS EINEN EINGEBAUTEN CACHE-SERVER IN EINER PLATTFORM IN GROSSER HÖHE UMFASST, UND ENTSPRECHENDES DATENÜBERTRAGUNGSVERFAHREN
TELECOMMUNICATION SYSTEM COMPRISING A CACHE SERVER ON-BOARD A HIGH-ALTITUDE PLATFORM AND ASSOCIATED DATA-TRANSMISSION METHOD

(30) Priorité: 15.06.2017 FR 1700644
(43) Date de publication de la demande: 19.12.2018
(73) Titulaire: THALES, 92400 Courbevoie (FR)
(72) Inventeur: GAYRARD, Jean-Didier, 31037 Toulouse (FR); ZOCCARATO, Walter, 31037 Toulouse (FR)
(74) Mandataire: Hammes, Pierre

(56) Documents cités:
- EP-A1- 3 010 162
- US-A1- 2016 080 069

## Description

L'invention concerne le domaine des systèmes à très haut débit par satellite ou des systèmes de communication pour accès très large bande à Internet par satellite géostationnaire. Ce domaine inclut les systèmes VHTS pour « Very High Throughput Satellite » en anglais.

L'invention porte sur un système de télécommunications comprenant un serveur de cache bord d'une plateforme à haute altitude pour complémenter un système à très haut débit par satellite. L'invention est utile dans les systèmes d'accès à Internet à couverture multi-faisceau et à très large bande opérant, par exemple, en bande Ka (20/30 GHz) pour décongestionner la liaison d'alimentation (ou « feeder link » en anglais) qui assure la transmission entre les stations d'alimentation (ou « feeder station » en anglais) au sol et le satellite, de l'ensemble des informations destinées aux terminaux utilisateur.

Dans la suite de la description, le terme « station » désigne un équipement comprenant un ou plusieurs émetteurs ou récepteurs, ou un ensemble d'émetteurs et de récepteurs, y compris les appareils accessoires, nécessaires pour assurer un service de communication en un emplacement donné.

Une « station placée sur une plate-forme à haute altitude » (HAPS en anglais pour High Altitude Platform Station) désigne une station installée sur un objet placé à une altitude élevée, par exemple au-dessus de 18 km et en un point spécifié, nominal, fixe par rapport à la Terre. L'objet peut être, par exemple, un aérostat.

Une « station passerelle » désigne une station destinée à assurer une liaison de communication avec une station placée sur une plateforme à haute altitude et à interfacer un réseau terrestre local.

Une « station d'alimentation » (feeder station en anglais) désigne une station terrienne destinée à assurer les liaisons d'alimentation avec le satellite et à interfacer Internet et/ou un réseau terrestre local.

Dans les systèmes à très haut débit par satellite, la liaison d'alimentation entre la station d'alimentation au sol et le satellite est un goulot d'étranglement car toutes les données numériques destinées aux utilisateurs et issues des utilisateurs passent sur cette liaison d'alimentation reliant la station d'alimentation au satellite.

Ainsi par exemple, un système à très haut débit par satellite opérant en bande Ka (20/30 GHz) ayant une zone de couverture constituée de 200 spots et une bande passante de 1.4 GHz allouée à chaque spot, est en mesure de transmettre aux utilisateurs en moyenne plus de 500 Gbits/seconde (efficacité spectrale moyenne de 1.8 b/s/Hz). La liaison d'alimentation doit donc permettre de transmettre vers le satellite plus de 500 Gbits/seconde, ce qui représente un débit considérable pour une liaison radiofréquence. Les bandes de fréquence allouées aux liaisons d'alimentation des satellites géostationnaires par l'Union Internationale des Télécommunications (ITU) n'excèdent pas 2 GHz en bande Ka (20/30 GHz) et 5 GHz en bande Q/V (40/50 GHz).

Il existe donc un problème à résoudre pour diminuer le flux de données qui transite sur la liaison d'alimentation afin de ne pas excéder les ressources en débit disponibles sur cette liaison.

Une solution connue pour résoudre l'inconvénient lié à une sollicitation trop importante de la liaison d'alimentation est basée sur une augmentation de la bande passante et/ou du débit de donnée de cette liaison. Cette augmentation de ressources peut se faire, par exemple, par une technique de réutilisation de fréquences et de polarisations entre stations d'alimentation distantes les unes des autres. Ainsi, un système à très haut débit par satellite nécessitant un débit de plus de 500 Gbits/seconde sur une liaison d'alimentation en bande Q/V peut intégrer plus d'une trentaine de stations d'alimentation distribuées dans la zone de couverture.

Par ailleurs, les liaisons radiofréquences en bande Q/V à travers l'atmosphère sont très sensibles aux phénomènes d'atténuation et de distorsion des signaux dues aux intempéries (pluie, neige, grêle...) et en conséquence ces liaisons radiofréquences sont régulièrement inopérantes. Il est nécessaire de mettre en œuvre une technique de diversité de site, en installant des stations d'alimentation de secours et de les relier aux autres stations d'alimentation par un réseau terrestre. Lorsqu'une liaison radiofréquence issue d'une station d'alimentation est inopérante du fait des intempéries, une liaison d'alimentation de secours est activée à partir d'une station d'alimentation de secours ne subissant pas d'intempéries.

Cette solution est très coûteuse en terme d'investissement initial pour installer un grand nombre de stations d'alimentation et les relier entre elles par un réseau à fibre optique ainsi qu'en terme d'opération et de maintenance.

Une autre solution pour éviter une sur-utilisation de la liaison d'alimentation est de réduire le besoin en débit de données de cette liaison par une technique de cache réseau (ou web caching en anglais). Tous les contenus, et en particulier les vidéos, demandés par les utilisateurs d'un système à très haut débit par satellite transitent par la liaison d'alimentation. Ainsi les contenus les plus populaires sont retransmis sur la liaison d'alimentation autant de fois qu'ils ont été requis. Des études prospectives montrent que le trafic vidéo va représenter de 70 à 80% de tout le trafic Internet en 2020. Des mesures sur des systèmes terrestres de cache réseau ont montré que la mise en cache des vidéos les plus populaires permet de réduire le trafic des serveurs d'au moins 50%. En transposant ce résultat à un système à très haut débit par satellite, une réduction de 50% du besoin en débit de la liaison d'alimentation est envisageable avec la mise en œuvre d'un système de cache réseau.

La mise en œuvre d'un cache réseau peut se faire dans trois emplacements du système : dans le terminal utilisateur, dans la station d'alimentation et dans le satellite. L'installation d'un serveur de cache dans les terminaux utilisateur a un très faible impact sur le débit de données de la liaison d'alimentation et elle est, en général, déjà mise en œuvre dans les systèmes à très haut débit par satellite. L'installation d'un système de cache réseau dans une station d'alimentation n'a aucun impact sur le débit de la liaison d'alimentation. Seule l'installation d'un système de cache réseau à bord du satellite permet de réduire le besoin de débit de données sur la liaison d'alimentation.

Une mise en œuvre de cette solution, consistant à installer un système de cache réseau à bord d'un satellite, a été décrite dans le brevet américain US 6697850 « Satellite-based communication system having an On-board Internet Web Proxy cache ». Cette solution est très complexe et coûteuse car elle nécessite d'embarquer à bord du satellite des matériels supplémentaires et spécifiques tels que des démodulateurs multi-porteuses pour détecter les requêtes issues des terminaux utilisateur, un serveur mandataire ou serveur proxy (proxy server en anglais) pour analyser les requêtes, un gestionnaire ou serveur de cache et sa mémoire pour stocker et gérer les contenus, des modulateurs et des multiplexeurs pour transmettre vers les utilisateurs les contenus cachés, des démodulateurs haut débit pour recevoir par la liaison d'alimentation les contenus à cacher. Le déploiement d'une telle solution, présente un autre inconvénient, à savoir, la mise en œuvre d'un nouveau type de terminal utilisateur plus complexe et plus onéreux.

Afin de pallier aux inconvénients des solutions précitées, l'invention propose un système à très haut débit par satellite complémenté par un système de cache réseau basé sur une station placée sur une plateforme à haute altitude, par exemple un aérostat.

L'invention présente l'avantage de permettre une diminution du débit requis sur la liaison d'alimentation sans pour autant nécessiter d'installer un serveur de cache à bord du satellite.

L'invention a pour objet un système de télécommunications comprenant :
- au moins une station d'alimentation au sol ayant accès à au moins un serveur distant,
- une charge utile de satellite adaptée pour établir une première liaison de communication avec au moins un utilisateur au sol et une deuxième liaison de communication avec ladite au moins une station d'alimentation,
- au moins une station placée sur une plateforme à haute altitude adaptée pour établir une troisième liaison de communication avec la charge utile de satellite et comprenant un serveur de cache comprenant une mémoire,
- et au moins une station passerelle au sol configurée pour faire communiquer ladite au moins une station d'alimentation au sol avec ladite au moins une station placée sur une plateforme à haute altitude,
- le système de télécommunications étant configuré pour sauvegarder, dans la mémoire, des données, dites données populaires, provenant du serveur distant et susceptibles d'être requises plusieurs fois par au moins un utilisateur et retransmettre sur requête à au moins un utilisateur des données populaires sauvegardées dans la mémoire.

Selon un aspect particulier de l'invention, ladite au moins une station d'alimentation au sol est configurée pour :
- recevoir au moins une requête de données d'un utilisateur,
- déterminer si les données requises sont sauvegardées dans la mémoire d'un serveur de cache d'au moins une station placée sur une plateforme à haute altitude,
- si les données requises sont sauvegardées dans la mémoire, transmettre la requête à ladite au moins une station placée sur une plateforme à haute altitude,
- si les données requises ne sont pas sauvegardées dans la mémoire, récupérer les données requises auprès d'au moins un serveur distant et déterminer si les données requises sont des données populaires,
- si les données requises sont des données populaires, transmettre les données requises vers au moins une station placée sur une plateforme à haute altitude,
- si les données requises ne sont pas des données populaires, transmettre les données requises à l'utilisateur via la charge utile de satellite.

Selon un aspect particulier de l'invention, ladite au moins une station placée sur une plateforme à haute altitude est configurée pour recevoir des données à mettre en cache dans la mémoire du serveur de cache, recevoir une requête d'accès à des données stockées dans la mémoire du serveur de cache et transmettre des données stockées dans la mémoire du serveur de cache à au moins un utilisateur au sol via la charge utile de satellite.

Selon un aspect particulier de l'invention, la charge utile de satellite est configurée pour retransmettre à ladite au moins une station d'alimentation des requêtes émises par des utilisateurs au sol, agréger des données ou des signaux émis par ladite au moins une station d'alimentation et par ladite au moins une station placée sur une plateforme à haute altitude et retransmettre auxdits utilisateurs les données agrégées ou les signaux agrégés.

Selon une variante particulière de l'invention, la charge utile de satellite comprend :
- au moins un premier récepteur pour recevoir un signal émis par ladite au moins une station d'alimentation et convertir le signal reçu en fréquence,
- au moins un second récepteur pour recevoir un signal émis par ladite au moins une station placée sur une plateforme à haute altitude,
- au moins un dispositif d'agrégation de signaux pour multiplexer en fréquence les signaux reçus par ledit au moins un premier récepteur et les signaux reçus par ledit au moins un second récepteur en fonction de la fréquence à laquelle ils sont destinés à être retransmis vers un utilisateur au sol,
- au moins un émetteur pour retransmettre les signaux en sortie dudit au moins un dispositif d'agrégation vers un utilisateur au sol.

Selon une variante particulière de l'invention, la charge utile de satellite comprend :
- au moins un premier récepteur pour recevoir des données émises par ladite au moins une station d'alimentation,
- au moins un second récepteur pour recevoir des données émises par ladite au moins une station placée sur une plateforme à haute altitude,
- au moins un dispositif de routage pour multiplexer les données reçues par ledit au moins un premier récepteur et les données reçues par ledit au moins un second récepteur en fonction de l'utilisateur au sol auquel elles sont destinées,
- au moins un dispositif d'agrégation de signaux pour multiplexer temporellement les données provenant dudit au moins un dispositif de routage et destinées à un utilisateur au sol,
- au moins un émetteur pour retransmettre les données en sortie dudit au moins un dispositif d'agrégation vers un utilisateur au sol.

Selon un aspect particulier de l'invention, ladite au moins une station passerelle et ladite au moins une station d'alimentation sont interconnectées au moyen d'un réseau local ou du réseau Internet.

Selon un aspect particulier de l'invention, ladite au moins une station placée sur une plateforme à haute altitude et ladite au moins une station passerelle sont adaptées pour établir au moins une liaison de communication radiofréquence bidirectionnelle.

Selon un aspect particulier de l'invention, ladite au moins une station placée sur une plateforme à haute altitude et la charge utile de satellite sont configurées pour établir au moins une liaison de communication optique en espace libre.

Selon un aspect particulier de l'invention, ladite au moins une station d'alimentation au sol et la charge utile de satellite sont configurées pour établir au moins une liaison de communication bidirectionnelle radiofréquence.

Selon un aspect particulier de l'invention, une plateforme à haute altitude stationnaire est un aérostat équipé de moyens de propulsion pour rester stationnaire autour d'un point spécifié, nominal et fixe par rapport à la Terre.

L'invention a également pour objet un procédé de transmission de données au moyen d'un système de télécommunications comprenant au moins une station d'alimentation au sol ayant accès à au moins un serveur distant, une charge utile de satellite adaptée pour établir une première liaison de communication avec au moins un utilisateur au sol et une deuxième liaison de communication avec ladite au moins une station d'alimentation, au moins une station placée sur une plateforme à haute altitude adaptée pour établir une troisième liaison de communication avec la charge utile de satellite et comprenant un serveur de cache comprenant une mémoire et au moins une station passerelle au sol configurée pour faire communiquer ladite au moins une station d'alimentation au sol avec ladite au moins une station placée sur une plateforme à haute altitude, ledit procédé comprenant les étapes suivantes :
- au moins une station d'alimentation au sol reçoit une requête de données d'un utilisateur,
- ladite au moins une station d'alimentation au sol détermine si les données requises sont sauvegardées dans la mémoire d'un serveur de cache d'au moins une station placée sur une plateforme à haute altitude,
- si les données requises sont sauvegardées dans la mémoire, ladite au moins une station d'alimentation au sol transmet la requête à ladite au moins une station placée sur une plateforme à haute altitude qui transmet les données sauvegardées en mémoire à au moins un utilisateur au sol via la charge utile de satellite,
- si les données requises ne sont pas sauvegardées dans la mémoire, ladite au moins une station d'alimentation au sol récupère les données requises auprès d'au moins un serveur distant et détermine si les données requises sont des données populaires, susceptibles d'être requises plusieurs fois par au moins un utilisateur,
- si les données requises sont des données populaires, ladite au moins une station d'alimentation au sol transmet les données requises vers au moins une station placée sur une plateforme à haute altitude qui les met en cache dans la mémoire du serveur de cache et les transmet à au moins un utilisateur au sol via la charge utile de satellite,
- si les données requises ne sont pas des données populaires, ladite au moins une station d'alimentation au sol transmet les données requises à l'utilisateur via la charge utile de satellite.

D'autres caractéristiques et avantages de la présente invention apparaîtront mieux à la lecture de la description qui suit en relation aux dessins annexés qui représentent :
- La figure 1, un schéma d'un système de communication pour accès très large bande à Internet ou système à très haut débit par satellite complémenté par un système de cache réseau selon l'invention.
- La figure 2, un schéma du cheminement d'une requête d'un contenu par un utilisateur dans le système selon l'invention,
- La figure 3, un schéma du cheminement d'un contenu requis par un utilisateur dans le système selon l'invention dans le cas où le contenu est en cache dans le serveur de cache placé sur la plateforme à haute altitude,
- La figure 4, un schéma du cheminement d'un contenu requis par un utilisateur dans le système selon l'invention dans le cas où le contenu n'était pas en cache,
- La figure 5, un organigramme de la méthode pour relayer les requêtes et les contenus entre équipements et entités du système selon l'invention,
- La figure 6, un schéma d'une charge utile de satellite comprenant un transpondeur selon un premier mode de réalisation de l'invention,

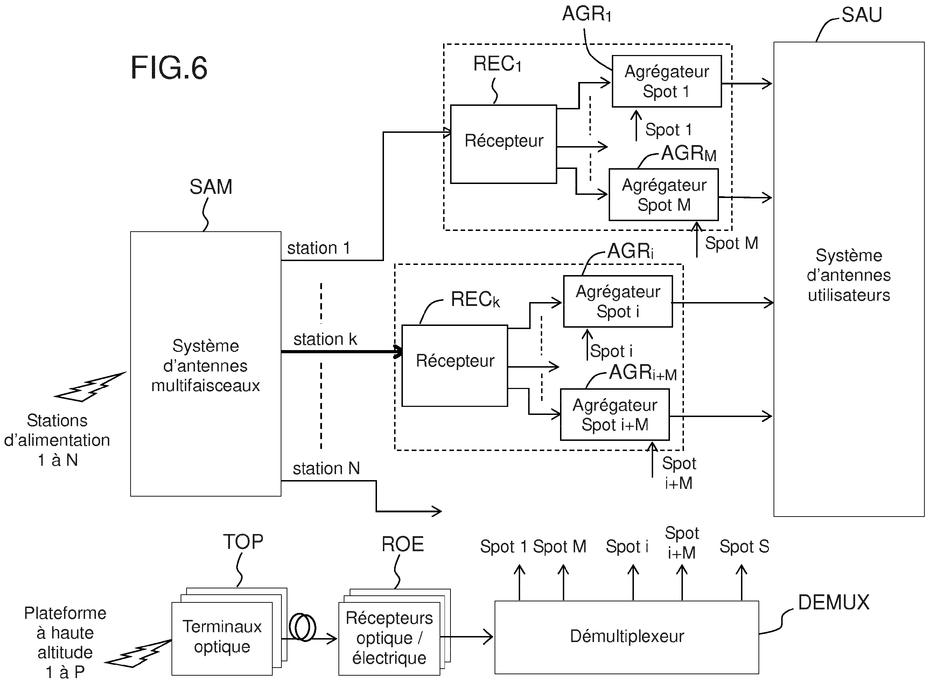

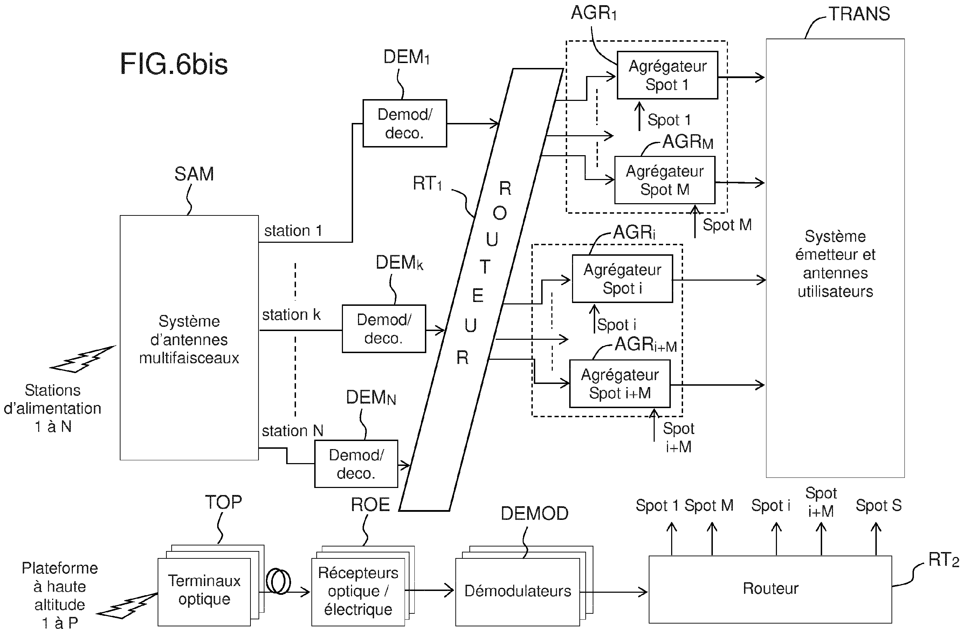

- La figure 6bis, un schéma d'une charge utile de satellite comprenant un transpondeur selon un deuxième mode de réalisation de l'invention,

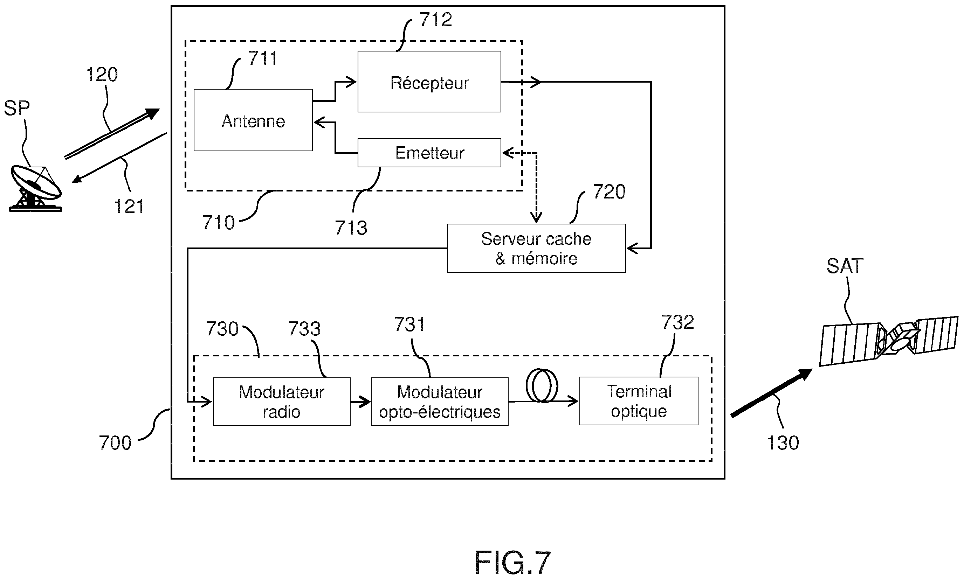

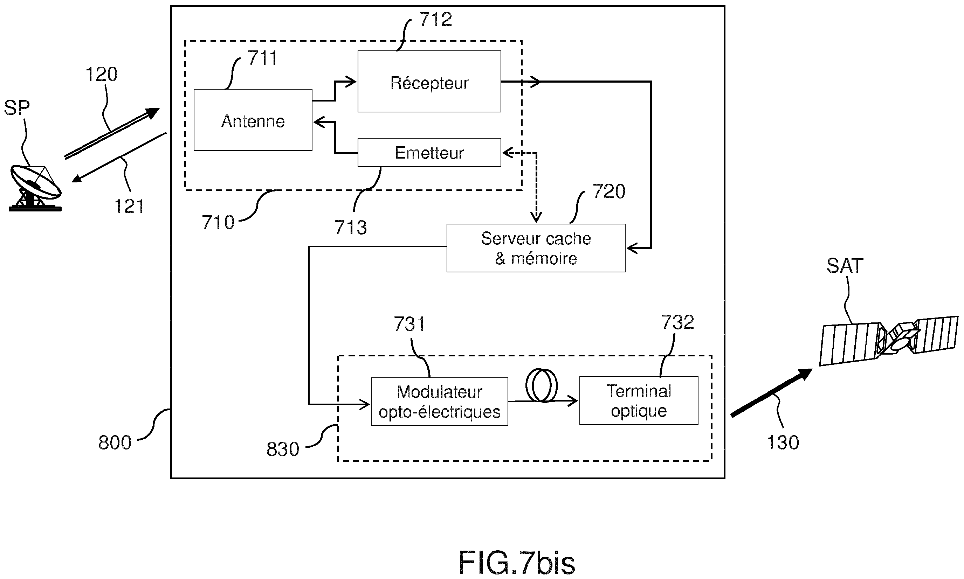

- La figure 7, un schéma d'un premier exemple de charge utile placée sur une plateforme à haute altitude d'un système selon l'invention correspondant au premier mode de réalisation de la figure 6,
- La figure 7bis, un schéma d'un second exemple de charge utile placée sur une plateforme à haute altitude d'un système selon l'invention correspondant au second mode de réalisation de la figure 6bis,

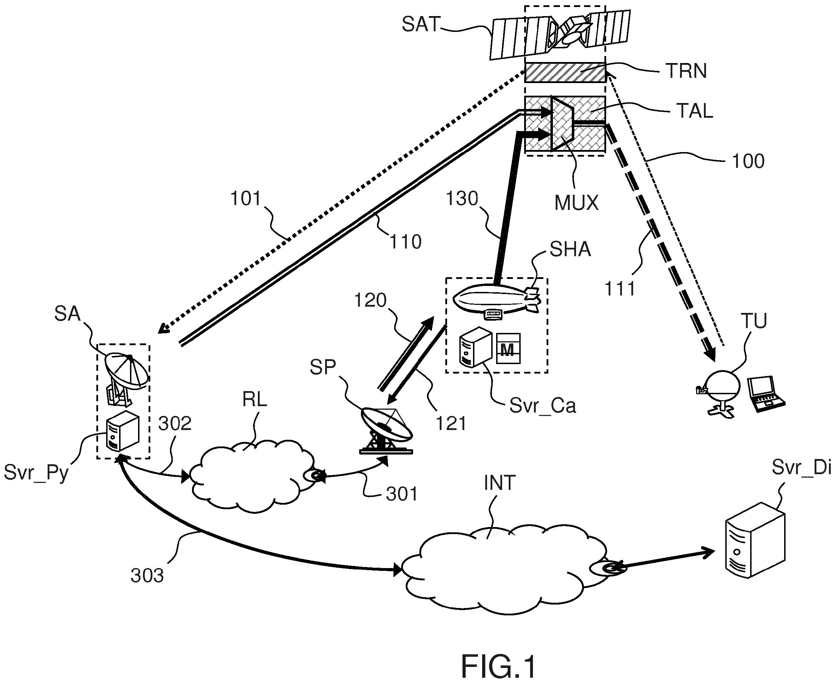

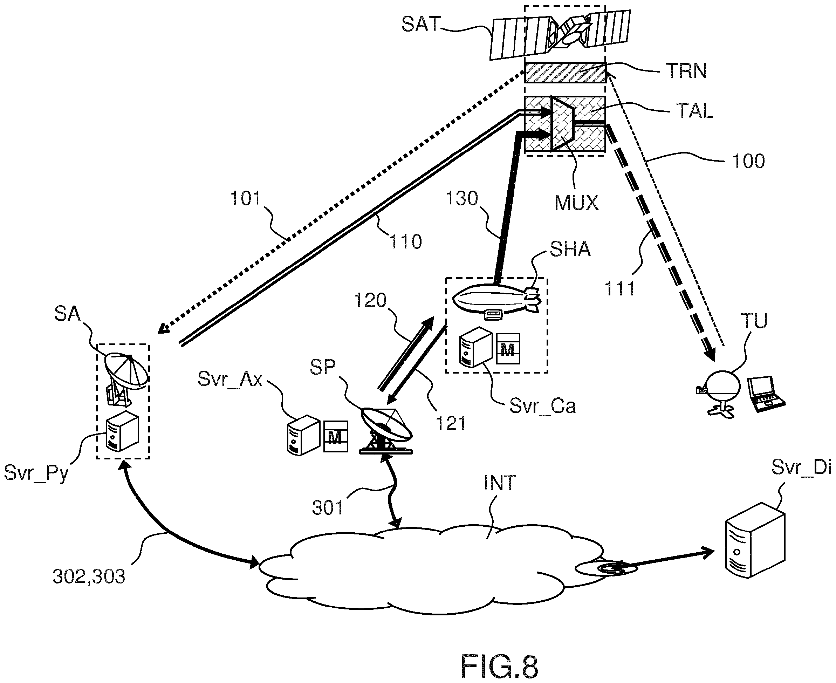

- La figure 8, un schéma d'une variante de réalisation du système selon l'invention présenté à la figure 1.

La figure 1 représente un exemple de système à très haut débit par satellite comprenant un serveur de cache et sa mémoire installés dans une station placée sur une plateforme à haute altitude selon un mode de réalisation de l'invention.

Dans l'exemple de la figure 1, le système selon l'invention comprend une station placée sur une plateforme à haute altitude SHA équipée d'un serveur de cache Svr_Ca comprenant une mémoire cache M. La station SHA est apte à communiquer d'une part avec un réseau local terrestre RL via une station passerelle SP au sol et d'autre part avec un ou plusieurs terminaux utilisateur TU via le satellite SAT.

La station placée sur une plateforme à haute altitude SHA est équipée d'un dispositif de transmission pour établir une liaison radiofréquence bidirectionnelle 120,121 avec une station passerelle SP. La station placée sur une plateforme à haute altitude SHA est aussi équipée d'un dispositif de transmission pour établir une liaison optique en espace libre ou liaison laser 130 avec le satellite SAT. La plateforme à haute altitude SHA est, par exemple, un aérostat stratosphérique. Elle est pourvue de moyens de propulsion, typiquement un moteur, lui permettant de compenser la force des vents pour rester stationnaire autour d'un point spécifié, nominal, fixe par rapport à la Terre.

De plus, le système selon l'invention comprend au moins une station passerelle SP apte à communiquer d'une part avec la station placée sur une plateforme à haute altitude SHA et d'autre part avec au moins une station d'alimentation SA via un réseau local RL. La station passerelle SP est équipée d'un dispositif de transmission pour établir une liaison radiofréquence bidirectionnelle 120,121 avec la station placée sur une plateforme à haute altitude SHA. La station passerelle SP est aussi reliée, via une liaison de communication 301, au réseau local RL.

De plus, le système selon l'invention comprend au moins une station d'alimentation SA équipée d'un serveur proxy Svr_Py et apte à communiquer d'une part avec le réseau local RL et le réseau Internet INT, et d'autre part avec les terminaux utilisateur TU via le satellite SAT. Les serveurs proxy installés sur différentes stations d'alimentation sont mis en réseau pour communiquer entre eux. La station d'alimentation SA est équipée d'un dispositif de transmission pour établir une liaison radiofréquence bidirectionnelle 101,110 avec le satellite SAT. La station d'alimentation SA est aussi équipée pour établir une liaison de communication 302 avec le réseau local et une autre liaison de communication 303 avec le réseau Internet. La liaison radiofréquence 110 montante entre la station d'alimentation SA et le satellite SAT est appelée liaison d'alimentation « aller » et est reçue par un transpondeur « aller » TAL du satellite SAT. La liaison radio 101 descendante entre le satellite SAT et la station d'alimentation SA est appelée liaison d'alimentation « retour » et est émise par un transpondeur « retour » TRN du satellite SAT.

De plus, le système selon l'invention comprend une charge utile de satellite SAT équipée d'un ou plusieurs transpondeurs « retour » TRN aptes à établir une liaison radio 110 avec au moins une station d'alimentation SA et une liaison radio 111 avec des terminaux utilisateur TU, et d'un ou plusieurs transpondeurs «aller» TAL aptes à établir une liaison radio 101 avec au moins une station d'alimentation SA, une liaison laser 130 avec au moins une station placée sur une plateforme à haute altitude SHA et une liaison radio 100 avec des terminaux utilisateur TU. Un transpondeur « aller » est équipé d'un dispositif d'agrégation de flux de données MUX qui agrège les données véhiculées par la liaison radio 110 et par la liaison laser 130 en un flux de données uniforme transmis par la liaison radio 111.

De plus, le système selon l'invention comprend un réseau local terrestre RL qui relie entre-elles les stations d'alimentation SA et les stations passerelle SP. Dans un mode de réalisation particulier de l'invention, le réseau local terrestre RL est le réseau Internet INT.

Dans une autre variante de réalisation de l'invention, plusieurs stations placées sur des plateformes à haute altitude SHA associées chacune à une station passerelle SP différente, sont prévues pour un même satellite SAT. Un avantage de cette variante est qu'elle permet une meilleure gestion de la mémoire cache en bénéficiant de plusieurs serveurs de cache disposés dans plusieurs stations.

Le système selon l'invention décrit à la figure 1 permet de mettre en cache dans un serveur de cache embarqué sur une station placée sur une plateforme à haute altitude, des données populaires susceptibles d'être requises plusieurs fois par un ou plusieurs utilisateurs.

L'expression « données populaires » est employée pour désigner des données qui présentent un score de popularité élevé, ce score traduisant la probabilité que ces données soient requises à nouveau prochainement par un ou plusieurs utilisateurs. Ainsi, une donnée populaire est une donnée susceptible d'être requise à nouveau dans un intervalle de temps futur de durée prédéfinie.

La notion de popularité de données ou d'un contenu est utilisée pour sélectionner les contenus à mettre en mémoire et à arbitrer leur maintien en mémoire. Un score de popularité est calculé sur la base de certains critères. Les critères utilisés sont, par exemple, la fréquence des requêtes d'utilisateurs sollicitant la transmission d'un contenu, l'intervalle de temps entre deux requêtes sollicitant la transmission d'un contenu identique, la taille binaire d'un contenu, la nature d'un contenu (vidéo, image, son, texte), l'ancienneté d'un contenu.

On décrit à présent le fonctionnement du système selon l'invention pour la gestion de la mise en cache de données populaires.

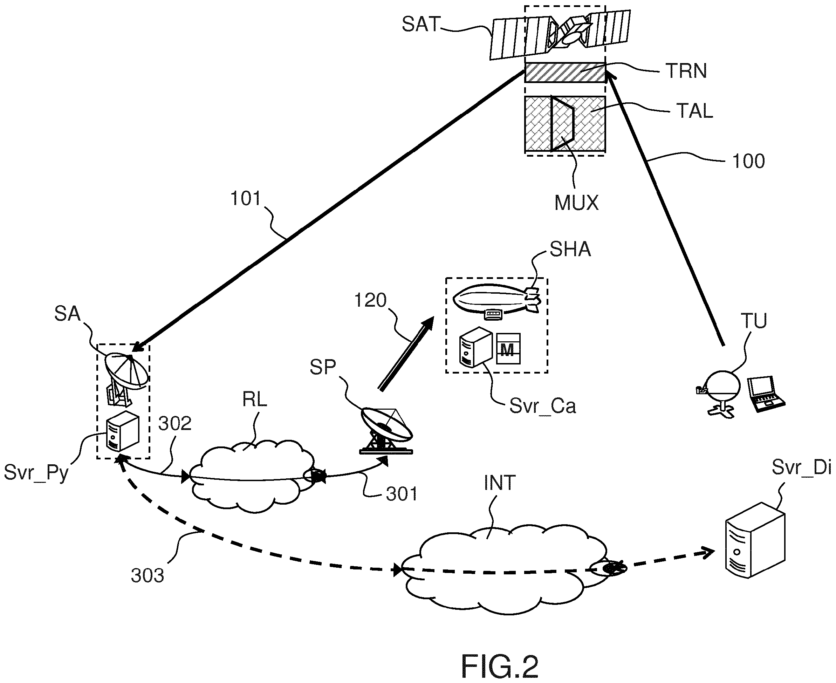

La figure 2 représente, sur le même exemple que celui de la figure 1, un exemple de cheminement, dans le système selon l'invention, d'une requête issue d'un terminal utilisateur TU.

A un instant donné, le terminal utilisateur TU génère une requête de contenu et la transmet au serveur proxy Svr_Py de la station d'alimentation SA via le transpondeur « retour » TRN du satellite SAT et la station d'alimentation SA. La requête est véhiculée par les liaisons radiofréquences 100 et 101. Le serveur proxy Svr_Py analyse la requête et détermine si le serveur de cache Svr_Ca de la plateforme à haute altitude SHA contient une copie valide du contenu requis dans sa mémoire cache M. L'exemple de la figure 2 est limité à un seul serveur de cache, cependant et comme indiqué précédemment, plusieurs serveurs de cache disposés sur plusieurs stations placées sur différentes plateformes à haute altitude peuvent être envisagés. Si plusieurs serveurs de cache coexistent, le serveur proxy Svr_Py est configuré pour déterminer si l'un au moins des serveurs de cache disponibles contient une copie valide du contenu requis.

Si le serveur de cache Svr_Ca a une copie du contenu sauvegardé en mémoire cache, le serveur proxy Svr_Py transmet la requête au serveur de cache Svr_Ca via le réseau local RL et la station passerelle SP. La requête est véhiculée par la liaison de communication 302, par le réseau local RL, par la liaison de communication 301 et par la liaison radiofréquence 120.

Si le serveur de cache Svr_Ca n'a pas de copie du contenu en mémoire cache, le serveur proxy Svr_Py transmet la requête à un serveur distant Svr_Di dépositaire du contenu via Internet. La requête est véhiculée par la liaison de communication 303 et par Internet.

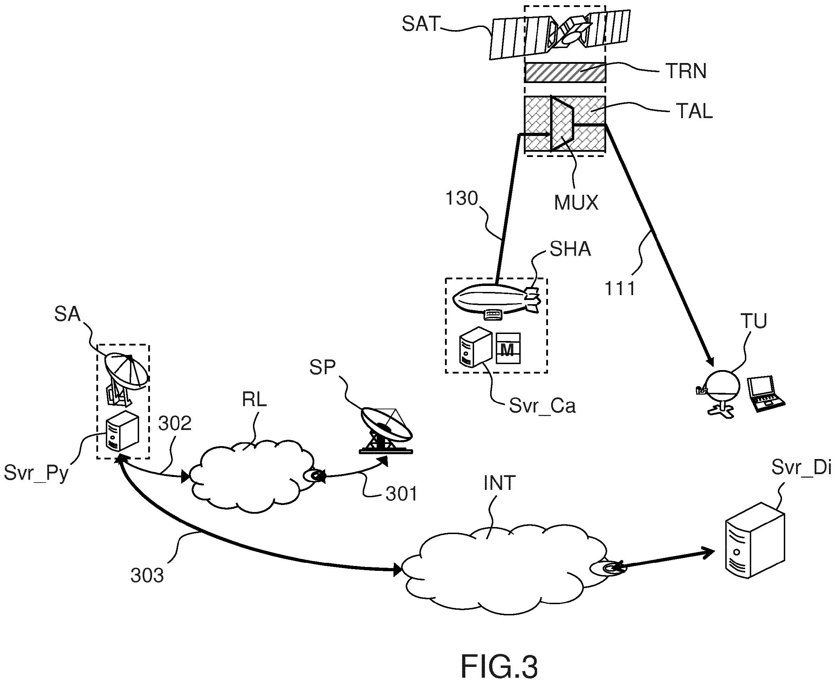

La figure 3 représente un exemple du cheminement d'un contenu requis par un terminal utilisateur TU dans le système selon l'invention dans le cas où le contenu est sauvegardé dans la mémoire du serveur de cache Svr_Ca placé dans une plateforme à haute altitude. Le serveur de cache Svr_Ca analyse la requête et transmet le contenu requis au terminal utilisateur TU via le transpondeur « aller » TAL du satellite SAT. Le transpondeur « aller » TAL est adapté pour agréger les données émises par la station SHA avec celles émises par la station d'alimentation SA sur la liaison d'alimentation 110. Le contenu est véhiculé par la liaison laser 130 et la liaison radiofréquence 111.

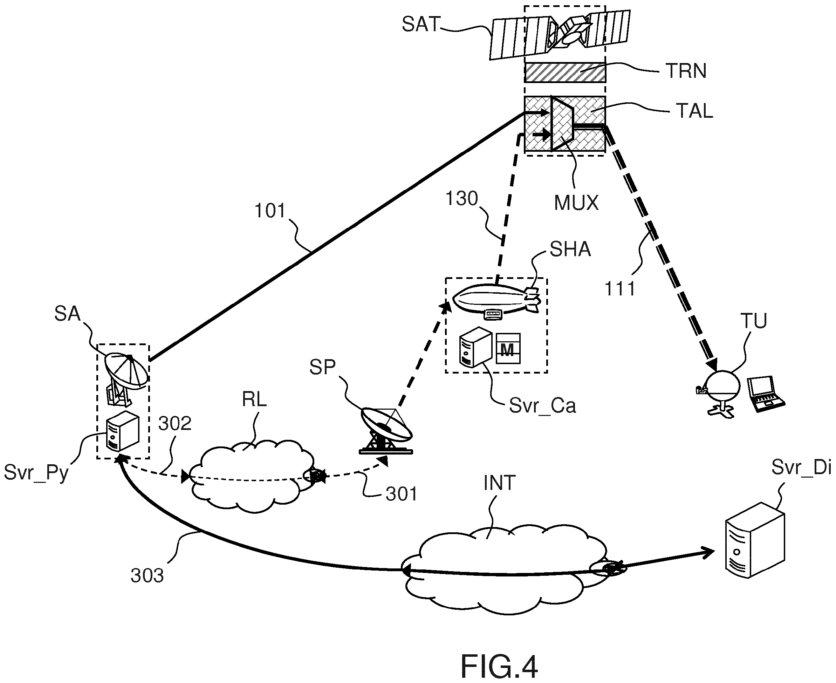

La figure 4 représente un exemple du cheminement d'un contenu requis par un terminal utilisateur TU dans le système selon l'invention dans le cas où le contenu n'est pas sauvegardé dans la mémoire du serveur de cache Svr_Ca placé dans une plateforme à haute altitude.

Dans ce cas, le serveur distant Svr_Di transmet le contenu requis au serveur proxy Svr_Py de la station d'alimentation SA via Internet et la liaison de communication 303. Le serveur proxy Svr_Py de la station d'alimentation SA analyse la popularité du contenu fourni par le serveur distant Svr_Di et évalue l'intérêt de mettre en cache ce contenu dans la mémoire du serveur de cache Svr_Ca placé sur la plateforme à haute altitude.

Si le contenu n'est pas assez populaire pour justifier sa mise en cache, le serveur proxy Svr_Py de la station d'alimentation SA transmet le contenu requis au terminal utilisateur TU via le transpondeur « aller » TAL du satellite SAT. Le contenu est véhiculé par les liaisons radiofréquences 110,111.

Si le contenu est suffisamment populaire pour justifier sa mise en cache, le serveur proxy Svr_Py de la station d'alimentation SA transmet le contenu au serveur de cache Svr_Ca de la plateforme à haute altitude via le réseau local RL et la station passerelle SP. Le contenu est véhiculé par la liaison de communication 302, le réseau local RL, la liaison de communication 301 et la liaison radiofréquence 120. Le serveur de cache Svr_Ca met en mémoire le contenu et transmet au terminal utilisateur TU le contenu requis via le transpondeur « aller » TAL du satellite SAT. Le contenu est véhiculé par la liaison laser 130 et la liaison radiofréquence 111.

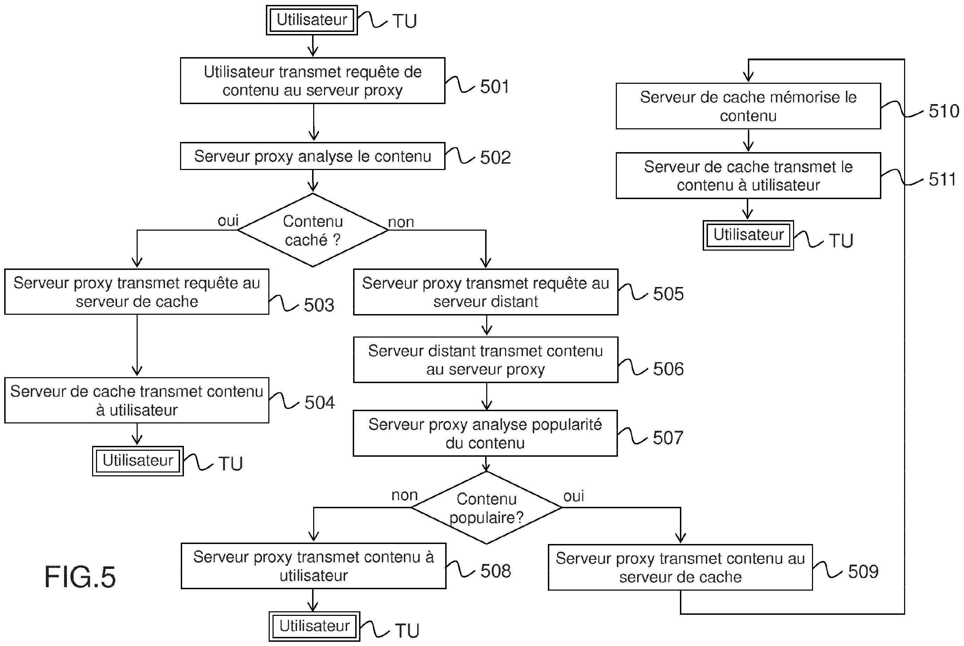

La figure 5 représente, sur un organigramme, les différentes étapes d'une méthode de transmission de données à un terminal utilisateur TU en utilisant le système selon l'invention.

Dans une première étape 501, un terminal utilisateur TU transmet une requête de contenu au serveur proxy Svr_Py d'une station d'alimentation SA via un satellite SAT. Sur réception de la requête, le serveur proxy Svr_Py analyse 502 la requête pour déterminer si le contenu requis est disponible ou non dans une mémoire cache d'un serveur de cache.

Si le contenu requis est disponible dans une mémoire cache d'un serveur de cache, alors le serveur proxy Svr_Py transmet 503 la requête au serveur de cache Svr_Ca embarqué dans une plateforme à haute altitude SHA. Le serveur de cache Svr_Ca transmet ensuite 504 le contenu requis au terminal utilisateur TU via le satellite SAT.

Si le contenu requis n'est disponible dans aucune mémoire cache d'un serveur de cache, alors le serveur proxy Svr_Py transmet 505 la requête de l'utilisateur à un serveur distant Svr_Di via le réseau Internet. Le serveur distant Svr_Di transmet 506 le contenu requis au serveur proxy Svr_Py de la station d'alimentation SA via le réseau Internet. Le serveur proxy Svr_Py analyse 507 ensuite la popularité du contenu requis.

Si le contenu requis n'est pas considéré comme populaire, alors le serveur proxy Svr_Py transmet 508 ce contenu au terminal utilisateur TU via la liaison d'alimentation 110 et le satellite SAT.

Si le contenu requis est considéré comme populaire, alors le serveur proxy Svr_Py transmet 509 le contenu à un serveur de cache Svr_Ca embarqué dans une plateforme à haute altitude SHA pour qu'il soit mis en cache. Si plusieurs serveurs de cache sont disponibles, le serveur proxy Svr_Py sélectionne l'un d'entre eux en utilisant comme critère, par exemple, la place restante disponible dans chaque mémoire cache ou la provenance géographique de la requête. Le serveur de cache Svr_Ca mémorise 510 dans sa mémoire cache le contenu transmis par le serveur proxy Svr_Py, en informe le serveur proxy Svr_Py puis transmet 511 le contenu au terminal utilisateur TU via le satellite SAT.

La figure 6 représente, sur un schéma, un exemple d'architecture d'un transpondeur « aller » TAL de la charge utile d'un satellite SAT du système selon un premier mode de réalisation de l'invention.

Un transpondeur « aller » TAL comprend un système d'antenne multifaisceaux SAM pour recevoir les signaux radio de liaisons d'alimentation émis par N stations d'alimentation différentes. Le système d'antenne multifaisceaux SAM comprend, par exemple, une antenne distincte pour chaque liaison d'alimentation. Le transpondeur TAL comprend également plusieurs dispositifs de réception REC₁,RECₖ, chaque dispositif de réception étant associé à une liaison d'alimentation. Un dispositif de réception REC₁,RECₖ a pour fonction l'amplification du signal radio, le démultiplexage fréquentiel du signal et la transposition du signal en fréquence sur une fréquence à laquelle il est destiné à être réémis sur la liaison descendante du satellite, vers un terminal utilisateur au sol. Sur la liaison d'alimentation 110, les signaux sont émis selon un plan de fréquences prédéterminé. Chaque fréquence ou sous-bande de fréquence correspond notamment à un spot terrestre comprenant plusieurs terminaux TU. Ainsi, les signaux reçus par le transpondeur TAL en provenance d'une même liaison d'alimentation peuvent inclure des contenus transmis sur différentes fréquences, car destinés à différents utilisateurs. Un dispositif de réception REC₁,RECₖ a donc pour rôle de séparer les signaux reçus en fonction de leur fréquence sur la liaison d'alimentation 110, de transposer les signaux vers une autre fréquence correspondant au plan de fréquence sur la liaison descendante 100, puis de transmettre ces signaux à un dispositif agrégateur de flux AGR₁, AGR_{M}, AGRᵢ, AGR_{i+M}. Pour chaque spot de la zone de couverture à couvrir, un dispositif agrégateur de flux AGR₁, AGR_{M}, AGRᵢ, AGR_{i+M} a pour fonction le multiplexage en fréquence des signaux transmis par le dispositif de réception 31 d'une part et des signaux transmis par le démultiplexeur DEMUX d'autre part. Les signaux multiplexés en sortie d'un dispositif agrégateur de flux AGR₁, AGR_{M}, AGRᵢ, AGR_{i+M} sont dirigés vers le système d'antennes utilisateur SAU pour être transmis sur la liaison descendante 100.

Le transpondeur TAL comprend également au moins une chaine de réception associée à une liaison optique 130 avec au moins une station placée sur une plateforme à haute altitude SHA. Cette chaine de réception comprend un ou plusieurs terminaux optiques TOP aptes à recevoir les signaux optiques, un ou plusieurs récepteurs optique/électrique ROE aptes à convertir les signaux optiques en signaux électriques et un dispositif démultiplexeur DEMUX apte à démultiplexer les signaux reçus en fréquence pour les orienter vers les dispositifs agrégateur de flux AGR₁, AGR_{M}, AGRᵢ, AGR_{i+M} en fonction du spot auquel ils sont destinés. Si plusieurs stations placées sur une plateforme à haute altitude SHA sont prévues dans le système, alors le transpondeur TAL comprend autant de chaines de réception que de stations.

La figure 6bis représente, sur un schéma, un exemple d'architecture d'un transpondeur « aller » TAL du satellite du système selon un deuxième mode de réalisation de l'invention. Dans ce deuxième mode de réalisation, un transpondeur « aller » TAL comprend toujours un système d'antenne multifaisceaux SAM pour recevoir les signaux radio de liaisons d'alimentation émis par N stations d'alimentation différentes. Le système d'antenne multifaisceaux SAM comprend, par exemple, une antenne distincte pour chaque liaison d'alimentation. Le transpondeur TAL comprend également plusieurs dispositifs de réception DEM₁,DEMₖ,DEM_{N} aptes à démoduler et décoder les signaux reçus en provenance de chaque liaison d'alimentation. Ainsi, chaque dispositif de réception démodule un signal radio pour régénérer les flux de données numériques destinés aux terminaux utilisateur de chaque spot. Le transpondeur TAL comprend également un premier routeur RT₁ apte à router les flux de données numériques vers les différents dispositifs agrégateur de flux AGR₁, AGR_{M}, AGRᵢ, AGR_{i+M}. Dans ce second mode de réalisation, les flux issus des stations d'alimentation et à destination des différents spots, sont routés en fonction de leur destination qui est obtenue directement en démodulant et décodant les flux reçus et non plus simplement sur la base des plans de fréquence respectifs des liaisons montante 110 et descendante 100. Le transpondeur TAL comporte ainsi un dispositif agrégateur de flux pour chaque spot à couvrir. Chaque dispositif agrégateur de flux AGR₁, AGR_{M}, AGRᵢ, AGR_{i+M} est apte à multiplexer temporellement et synchroniser les flux de données provenant des dispositifs de réception DEM₁,DEMₖ,DEM_{N} d'une part et d'autre part les flux de données provenant du second routeur RT₂ de la chaine de réception associée aux plateformes à haute altitude. Les flux de données multiplexés sont transmis à un système de transmission TRANS comprenant au moins un codeur/modulateur pour moduler les données numériques reçues et une chaine de transmission radio ainsi que plusieurs antennes utilisateurs pour transmettre les signaux générés vers les différents spots.

Le transpondeur TAL comprend également au moins une chaine de réception associée à une liaison optique 130 avec au moins une station placée sur une plateforme à haute altitude SHA. Cette chaine de réception comprend un ou plusieurs terminaux optique TOP aptes à recevoir les signaux optiques, un ou plusieurs récepteurs optique/électrique ROE aptes à convertir les signaux optiques en signaux électriques, un ou plusieurs démodulateurs DEMOD pour démoduler les signaux électriques afin de régénérer les données numériques et un second routeur RT₂ apte à router les signaux reçus pour les orienter vers les dispositifs agrégateur de flux AGR₁, AGR_{M}, AGRᵢ, AGR_{i+M} en fonction du spot auquel ils sont destinés. La destination d'un flux est déterminée par analyse des données numériques démodulées, cette destination correspondant par exemple à l'adresse réseau destinataire des paquets de données. Dans une variante de réalisation de l'invention, le premier routeur RT₁ et le second routeur RT₂ sont fusionnés en un seul et unique routeur RT.

La figure 7 représente, sur un schéma, un exemple de charge utile d'une station placée sur une plateforme à haute altitude selon un premier mode de réalisation de l'invention correspondant au mode décrit à la figure 6.

La charge utile 700 comprend au moins une première charge utile d'accès station passerelle 710 pour communiquer avec une station passerelle au sol SP. La première charge utile 710 comprend au moins une antenne 711, un récepteur 712 et un émetteur 713. La charge utile 701 comprend aussi un serveur de cache et une mémoire 720. Le récepteur 712 est apte à sauvegarder des données dans la mémoire du serveur cache.

La charge utile 700 comprend en outre une seconde charge utile d'accès satellite 730 pour communiquer avec un transpondeur « aller » TAL d'un satellite SAT. Cette seconde charge utile 730 comprend au moins un modulateur radio 733 apte à récupérer des données numériques dans la mémoire du serveur de cache 720 et à moduler ces données pour générer un signal radio. Le modulateur radio 733 est également configuré pour transposer le signal radio vers une bande de fréquence correspondant au spot destinataire des données, dans le plan de fréquence de la liaison descendante 100 du satellite SAT vers les terminaux utilisateur TU. La seconde charge utile 730 comprend aussi un modulateur opto-électrique 731 apte à convertir le signal radio en un signal optique, et un terminal optique 732 pour émettre le signal optique vers le satellite SAT.

La figure 7bis représente, sur un schéma, un exemple de charge utile 800 d'une station placée sur une plateforme à haute altitude selon un second mode de réalisation de l'invention correspondant au mode décrit à la figure 6bis. Dans ce second mode de réalisation, le modulateur radio 733 est supprimé car il n'est pas nécessaire de transposer le signal vers une bande de fréquence correspondant à un spot destinataire car le signal optique généré est démodulé totalement à bord du satellite pour récupérer les données numériques et en déduire l'adresse du spot destinataire.

La figure 8 schématise une variante de réalisation du système selon l'invention présenté à la figure 1. Dans cette variante, le réseau local RL est remplacé par le réseau Internet INT. Dans ce cas, une station passerelle comporte en outre un serveur auxiliaire Svr_Ax apte à interfacer la station passerelle avec le réseau internet INT. La station passerelle SP est commandée par une station d'alimentation SA par l'intermédiaire du réseau internet INT.

## Revendications

1. Système de télécommunications comprenant :
- au moins une station d'alimentation au sol (SA) ayant accès à au moins un serveur distant (Svr_Di),
- une charge utile (TAL) de satellite (SAT) adaptée pour établir une première liaison de communication (100,111) avec au moins un utilisateur au sol (TU) et une deuxième liaison de communication (101,110) avec ladite au moins une station d'alimentation (SA),
- au moins une station placée sur une plateforme à haute altitude (SHA) adaptée pour établir une troisième liaison de communication (130) avec la charge utile (TAL) de satellite (SAT) et comprenant un serveur de cache (Svr_Ca) comprenant une mémoire (M),
- et au moins une station passerelle au sol (SP) configurée pour faire communiquer ladite au moins une station d'alimentation au sol (SA) avec ladite au moins une station placée sur une plateforme à haute altitude (SHA),
- le système de télécommunications étant configuré pour sauvegarder, dans la mémoire (M), des données, dites données populaires, provenant du serveur distant (Svr_Di) et susceptibles d'être requises plusieurs fois par au moins un utilisateur (TU) et retransmettre sur requête à au moins un utilisateur (TU) des données populaires sauvegardées dans la mémoire (M).

2. Système de télécommunications selon la revendication 1 dans lequel ladite au moins une station d'alimentation au sol (SA) est configurée pour :
- recevoir au moins une requête de données d'un utilisateur (TU),
- déterminer si les données requises sont sauvegardées dans la mémoire (M) d'un serveur de cache (Svr_Ca) d'au moins une station placée sur une plateforme à haute altitude (SHA),
- si les données requises sont sauvegardées dans la mémoire (M), transmettre la requête à ladite au moins une station placée sur une plateforme à haute altitude (SHA),
- si les données requises ne sont pas sauvegardées dans la mémoire (M), récupérer les données requises auprès d'au moins un serveur distant (Svr_Di) et déterminer si les données requises sont des données populaires,
- si les données requises sont des données populaires, transmettre les données requises vers au moins une station placée sur une plateforme à haute altitude (SHA),
- si les données requises ne sont pas des données populaires, transmettre les données requises à l'utilisateur (TU) via la charge utile (TAL) de satellite (SAT).

3. Système de télécommunications selon l'une des revendications précédentes dans lequel ladite au moins une station placée sur une plateforme à haute altitude (SHA) est configurée pour recevoir des données à mettre en cache dans la mémoire (M) du serveur de cache (Svr_Ca), recevoir une requête d'accès à des données stockées dans la mémoire (M) du serveur de cache (Svr_Ca) et transmettre des données stockées dans la mémoire (M) du serveur de cache (Svr_Ca) à au moins un utilisateur au sol (TU) via la charge utile (TAL) de satellite (SAT).

4. Système de télécommunications selon l'une des revendications précédentes dans lequel la charge utile (TAL) de satellite (SAT) est configurée pour retransmettre à ladite au moins une station d'alimentation (SA) des requêtes émises par des utilisateurs au sol (TU), agréger des données ou des signaux émis par ladite au moins une station d'alimentation (SA) et par ladite au moins une station placée sur une plateforme à haute altitude (SHA) et retransmettre auxdits utilisateurs (TU) les données agrégées ou les signaux agrégés.

5. Système de télécommunications selon l'une des revendications précédentes dans lequel la charge utile (TAL) de satellite (SAT) comprend :
- au moins un premier récepteur (REC₁,..RECₖ) pour recevoir un signal émis par ladite au moins une station d'alimentation (SA) et convertir le signal reçu en fréquence,
- au moins un second récepteur (ROE) pour recevoir un signal émis par ladite au moins une station placée sur une plateforme à haute altitude (SHA),
- au moins un dispositif (AGR₁,..AGR_{M,...}AGRᵢ,...AGR_{i+M}) d'agrégation de signaux pour multiplexer en fréquence les signaux reçus par ledit au moins un premier récepteur (REC₁,..RECₖ) et les signaux reçus par ledit au moins un second récepteur (ROE) en fonction de la fréquence à laquelle ils sont destinés à être retransmis vers un utilisateur au sol (TU),
- au moins un émetteur (SAU) pour retransmettre les signaux en sortie dudit au moins un dispositif d'agrégation (AGR₁,..AGR_{M,...}AGRᵢ,...AGR_{i+M}) vers un utilisateur au sol (TU).

6. Système de télécommunications selon l'une des revendications 1 à 4 dans lequel la charge utile (TAL) de satellite (SAT) comprend :
- au moins un premier récepteur (DEM₁,...DEMₖ,...DEM_{N}) pour recevoir des données émises par ladite au moins une station d'alimentation (SA),
- au moins un second récepteur (ROE,DEMOD) pour recevoir des données émises par ladite au moins une station placée sur une plateforme à haute altitude (SHA),
- au moins un dispositif de routage (RT₁,RT₂) pour multiplexer les données reçues par ledit au moins un premier récepteur (DEM₁,...DEMₖ,...DEM_{N}) et les données reçues par ledit au moins un second récepteur (ROE,DEMOD) en fonction de l'utilisateur au sol auquel elles sont destinées,
- au moins un dispositif (AGR₁,..AGR_{M,...}AGRᵢ,...AGR_{i+M}) d'agrégation de signaux pour multiplexer temporellement les données provenant dudit au moins un dispositif de routage (RT₁,RT₂) et destinées à un utilisateur au sol,
- au moins un émetteur (TRANS) pour retransmettre les données en sortie dudit au moins un dispositif d'agrégation (AGR₁,..AGR_{M,...}AGRᵢ,...AGR_{i+M}) vers un utilisateur au sol.

7. Système de télécommunications selon l'une des revendications précédentes dans lequel ladite au moins une station passerelle (SP) et ladite au moins une station d'alimentation (SA) sont interconnectées au moyen d'un réseau local (RL) ou du réseau Internet (INT).

8. Système de télécommunications selon l'une des revendications précédentes dans lequel ladite au moins une station placée sur une plateforme à haute altitude (SHA) et ladite au moins une station passerelle (SP) sont adaptées pour établir au moins une liaison de communication radiofréquence bidirectionnelle (120,121).

9. Système de télécommunications selon l'une des revendications précédentes dans lequel ladite au moins une station placée sur une plateforme à haute altitude (SHA) et la charge utile (TAL) de satellite (SAT) sont configurées pour établir au moins une liaison de communication optique en espace libre (130).

10. Système de télécommunications selon l'une des revendications précédentes dans lequel ladite au moins une station d'alimentation au sol (SA) et la charge utile (TAL) de satellite (SAT) sont configurées pour établir au moins une liaison de communication bidirectionnelle radiofréquence (101,110).

11. Système de télécommunications selon l'une des revendications précédentes dans lequel une plateforme à haute altitude stationnaire (SHA) est un aérostat équipé de moyens de propulsion pour rester stationnaire autour d'un point spécifié, nominal et fixe par rapport à la Terre.

12. Procédé de transmission de données au moyen d'un système de télécommunications comprenant au moins une station d'alimentation (SA) au sol ayant accès à au moins un serveur distant (Svr_Di), une charge utile (TAL) de satellite (SAT) adaptée pour établir une première liaison de communication (100,111) avec au moins un utilisateur au sol (TU) et une deuxième liaison de communication (101,110) avec ladite au moins une station d'alimentation (SA), au moins une station placée sur une plateforme à haute altitude adaptée (SHA) pour établir une troisième liaison de communication (130) avec la charge utile (TAL) de satellite (SAT) et comprenant un serveur de cache (Svr_Ca) comprenant une mémoire (M) et au moins une station passerelle au sol (SP) configurée pour faire communiquer ladite au moins une station d'alimentation au sol (SA) avec ladite au moins une station placée sur une plateforme à haute altitude (SHA), ledit procédé comprenant les étapes suivantes :
- au moins une station d'alimentation au sol (SA) reçoit (501) une requête de données d'un utilisateur (TU),
- ladite au moins une station d'alimentation au sol (SA) détermine (502) si les données requises sont sauvegardées dans la mémoire (M) d'un serveur de cache (Svr_Ca) d'au moins une station placée sur une plateforme à haute altitude (SHA),
- si les données requises sont sauvegardées dans la mémoire (M), ladite au moins une station d'alimentation au sol (SA) transmet (503) la requête à ladite au moins une station placée sur une plateforme à haute altitude (SHA) qui transmet (504) les données sauvegardées en mémoire (M) à au moins un utilisateur au sol (TU) via la charge utile (TAL) de satellite (SAT),
- si les données requises ne sont pas sauvegardées dans la mémoire (M), ladite au moins une station d'alimentation au sol (SA) récupère (505,506) les données requises auprès d'au moins un serveur distant (Svr_Di) et détermine (507) si les données requises sont des données populaires, susceptibles d'être requises plusieurs fois par au moins un utilisateur (TU),
- si les données requises sont des données populaires, ladite au moins une station d'alimentation au sol (SA) transmet (509) les données requises vers au moins une station placée sur une plateforme à haute altitude (SHA) qui les met en cache (510) dans la mémoire (M) du serveur de cache (Svr_Ca) et les transmet à au moins un utilisateur au sol (TU) via la charge utile (TAL) de satellite (SAT),
- si les données requises ne sont pas des données populaires, ladite au moins une station d'alimentation (SA) au sol transmet (511) les données requises à l'utilisateur (TU) via la charge utile (TAL) de satellite (SAT).

## Patentansprüche

1. Telekommunikationssystem, das Folgendes umfasst:
- wenigstens eine Bodenversorgungsstation (SA) mit Zugang zu wenigstens einem entfernten Server (Svr_Di),
- eine Satelliten-(SAT)-Nutzlast (TAL), ausgelegt zum Aufbauen einer ersten Kommunikationsverbindung (100, 111) mit wenigstens einem Bodenbenutzer (TU) und einer zweiten Kommunikationsverbindung (101, 110) mit der wenigstens einen Versorgungsstation (SA),
- wenigstens eine Station, die auf einer Plattfom in großer Höhe (SHA) platziert und zum Aufbauen einer dritten Kommunikationsverbindung (130) mit der Satelliten-(SAT)-Nutzlast (TAL) ausgelegt ist, die einen Cache-Server (Svr_Ca) mit einem Speicher (M) umfasst,
- und wenigstens eine Boden-Gateway-Station (SP), konfiguriert zum Bewirken, dass die wenigstens eine Bodenversorgungsstation (SA) mit der wenigstens einen auf einer Plattform in großer Höhe (SHA) platzierten Station kommuniziert,
- wobei das Telekommunikationssystem zum Sichern von populär genannten Daten in einem Speicher (M) konfiguriert ist, die von dem entfernten Server (Svr_Di) kommen und mehrere Male durch wenigstens einen Benutzer (TU) angefordert und auf Anforderung zu wenigstens einem Benutzer (TU) der in dem Speicher (M) gesicherten populären Daten übertragen werden können.

2. Telekommunikationssystem nach Anspruch 1, bei dem die wenigstens eine Bodenversorgungsstation (SA) konfiguriert ist zum:
- Empfangen wenigstens einer Datenanforderung eines Benutzers (TU),
- Feststellen, ob die angeforderten Daten im Speicher (M) eines Cache-Servers (Svr_Ca) von wenigstens einer auf einer Plattform in großer Höhe (SHA) platzierten Station gesichert sind,
- Übertragen, wenn die angeforderten Daten im Speicher (M) gesichert sind, der Anforderung zu der wenigstens einen auf einer Plattform in großer Höhe (SHA) platzierten Station,
- Abrufen, wenn die angeforderten Daten nicht im Speicher (M) gesichert sind, der angeforderten Daten von wenigstens einem entfernten Server (Svr_Di) und Feststellen, ob die angeforderten Daten populäre Daten sind,
- Übertragen, wenn die angeforderten Daten populäre Daten sind, der angeforderten Daten zu wenigstens einer auf einer Plattform in großer Höhe (SHA) platzierten Station,
- Übertragen, wenn die angeforderten Daten keine populären Daten sind, der angeforderten Daten zum Benutzer (TU) über die Satelliten-(SAT)-Nutzlast (TAL).

3. Telekommunikationssystem nach einem der vorherigen Ansprüche, bei dem die wenigstens eine auf einer Plattform in großer Höhe (SHA) platzierte Station konfiguriert ist zum Empfangen von Daten, die im Speicher (M) des Cache-Speichers (Svr_Ca) zwischengespeichert werden sollen, zum Empfangen einer Anforderung von Zugang zu den im Speicher (M) des Cache-Speichers (Svr_Ca) gespeicherten Daten und zum Übertragen der im Speicher (M) des Cache-Speichers (Svr_Ca) gespeicherten Daten zu wenigstens einem Bodenbenutzer (TU) über die Satelliten-(SAT)-Nutzlast (TAL).

4. Telekommunikationssystem nach einem der vorherigen Ansprüche, bei dem die Satelliten-(SAT)-Nutzlast (TAL) konfiguriert ist zum erneuten Übertragen, zu der wenigstens einen Versorgungsstation (SA), der von den Bodenbenutzern (TU) emittierten Anforderungen, zum Sammeln der Daten oder Signale, die von der wenigstens einen Versorgungsstation (SA) und der wenigstens einen auf einer Plattform in großer Höhe (SHA) platzierten Station emittiert wurden, und zum Übertragen der gesammelten Daten oder der gesammelten Signale zu den Benutzern (TU).

5. Telekommunikationssystem nach einem der vorherigen Ansprüche, bei dem die Satelliten-(SAT)-Nutzlast (TAL) Folgendes umfasst:
- wenigstens einen ersten Empfänger (REC₁,...RECₖ) zum Empfangen eines von der wenigstens einen Versorgungsstation (SA) emittierten Signals und zum Umwandeln des empfangenen Signals in eine Frequenz,
- wenigstens einen zweiten Empfänger (ROE) zum Empfangen eines von der wenigstens einen auf einer Plattform in großer Höhe (SHA) platzierten Station,
- wenigstens eine Vorrichtung (AGR₁,...AGR_{M},...AGRᵢ,...AGR_{i+M}) zum Sammeln von Signalen zum Frequenzmultiplexen der von wenigstens einem ersten Empfänger (REC₁,...RRECₖ) empfangenen Signale und der von dem wenigstens einen zweiten Empfänger (ROE) empfangenen Signale in Abhängigkeit von der Frequenz, auf der sie zu einem Bodenbenutzer (TU) übertragen werden sollen,
- wenigstens einen Sender (SAU) zum erneuten Übertragen der Signale am Ausgang der wenigstens einen Sammelvorrichtung (AGR₁,...AGR_{M},...AGRᵢ,...AGR_{i+M}) zu einem Bodenbenutzer (TU).

6. Telekommunikationssystem nach einem der Ansprüche 1 bis 4, bei dem die Satelliten-(SAT)-Nutzlast (TAL) Folgendes umfasst:
- wenigstens einen ersten Empfänger (DEM₁,...DEMₖ,...DEM_{N}) zum Empfangen der von der wenigstens einen Versorgungsstation (SA) emittierten Daten,
- wenigstens einen zweiten Empfänger (ROE, DEMOD) zum Empfangen der von der wenigstens einen auf einer Plattform in großer Höhe (SHA) platzierten Station emittierten Daten,
- wenigstens eine Routing-Vorrichtung (RT₁, RT₂) zum Multiplexen der von dem wenigstens einen ersten Empfänger (DEM₁,...DEMₖ,...DEM_{N}) empfangenen Daten und der von dem wenigstens einen zweiten Empfänger (ROE, DEMOD) empfangenen Daten in Abhängigkeit von dem Bodenbenutzer, für den sie bestimmt sind,
- wenigstens eine Vorrichtung (AGR₁,...AGR_{M},...AGRᵢ,...AGR_{i+M}) zum Sammeln von Signalen zum Zeitmultiplexen der von wenigstens einer Routing-Vorrichtung (RT₁, RT₂) kommenden und für einen Bodenbenutzer bestimmten Daten,
- wenigstens einen Sender (TRANS) zum erneuten Übertragen der Daten am Ausgang der wenigstens einen Sammelvorrichtung (AGR₁,...AGR_{M},...AGRᵢ,...AGR_{i+M}) zu einem Bodenbenutzer.

7. Telekommunikationssystem nach einem der vorherigen Ansprüche, bei dem die wenigstens eine Gateway-Station (SP) und die wenigstens eine Versorgungsstation (SA) mittels wenigstens eines lokalen Netzwerks (RL) oder des Internets (INT) miteinander verbunden sind.

8. Telekommunikationssystem nach einem der vorherigen Ansprüche, bei dem die wenigstens eine auf einer Plattform in großer Höhe (SHA) platzierte Station und die wenigstens eine Gateway-Station (SP) zum Aufbauen wenigstens einer bidirektionalen Radiofrequenz-Kommunikationsverbindung (120, 121) ausgelegt sind.

9. Telekommunikationssystem nach einem der vorherigen Ansprüche, bei dem die wenigstens eine auf einer Plattfom in großer Höhe (SHA) platzierte Station und die Satelliten-(SAT)-Nutzlast (TAL) zum Aufbauen wenigstens einer optischen Kommunikationsverbindung im freien Raum (130) konfiguriert sind.

10. Telekommunikationssystem nach einem der vorherigen Ansprüche, bei dem die wenigstens eine Bodenversorgungsstation (SA) und die Satelliten-(SAT)-Nutzlast (TAL) zum Aufbauen wenigstens einer bidirektionalen Radiofrequenz-Kommunikationsverbindung (101, 110) konfiguriert sind.

11. Telekommunikationssystem nach einem der vorherigen Ansprüche, bei dem eine stationäre Plattfom in großer Höhe (SHA) ein Aerostat ist, der mit Antriebsmitteln ausgestattet ist, um um einen bestimmten nominalen, mit Bezug auf die Erde festen Punkt stationär zu bleiben.

12. Datenübertragungssystem mittels eines Telekommunikationssystems, umfassend wenigstens eine Bodenversorgungsstation (SA) mit Zugang zu wenigstens einem entfernten Server (Svr_Di), eine Satelliten-(SAT)-Nutzlast (TAL), ausgelegt zum Aufbauen einer ersten Kommunikationsverbindung (100, 111) mit wenigstens einem Bodenbenutzer (TU) und einer zweiten Kommunikationsverbindung (101, 110) mit der wenigstens einen Versorgungsstation (SA), wenigstens eine auf einer Plattfom in großer Höhe (SHA) platzierte Station, ausgelegt zum Aufbauen einer dritten Kommunikationsverbindung (130) mit der Satelliten-(SAT)-Nutzlast (TAL), und mit einem Cache-Server (Svr_Ca), der einen Speicher (M) umfasst, und wenigstens eine Boden-Gateway-Station (SP), konfiguriert um zu bewirken, dass die wenigstens eine Bodenversorgungsstation (SA) mit der wenigstens einen auf einer Plattform in großer Höhe (SHA) platzierten Station kommuniziert, wobei das Verfahren die folgenden Schritte beinhaltet:
- Empfangen (501), durch wenigstens eine Bodenversorgungsstation (SA), einer Datenanforderung von einem Benutzer (TU),
- Feststellen (502), durch die wenigstens eine Bodenversorgungsstation (SA), ob die angeforderten Daten im Speicher (M) eines Cache-Servers von wenigstens einer auf einer Plattform in großer Höhe (SHA) platzierten Station gesichert sind,
- Übertragen (503), wenn die angeforderten Daten im Speicher (M) gesichert sind, durch die wenigstens eine Bodenversorgungsstation (SA), der Anforderung zu der wenigstens einen auf einer Plattform in großer Höhe (SHA) platzierten Station, die die im Speicher (M) gesicherten Daten zu wenigstens einem Bodenbenutzer (TU) über die Satelliten-(SAT)-Nutzlast (TAL) überträgt (504),
- Abrufen (505, 506), wenn die angeforderten Daten nicht im Speicher (M) gesichert sind, durch die wenigstens eine Bodenversorgungsstation (SA), der angeforderten Daten an wenigstens einem entfernten Server (Svr_Di), und Feststellen (507), ob die angeforderten Daten populäre Daten sind, die mehrere Male durch wenigstens einen Benutzer (TU) angefordert werden können,
- Übertragen (509), wenn die angeforderten Daten populäre Daten sind, durch die wenigstens eine Bodenversorgungsstation (SA), der angeforderten Daten zu wenigstens einer auf einer Plattform in großer Höhe (SHA) platzierten Station, die sie im Speicher (M) des Cache-Servers (Svr_Ca) zwischenspeichert (510) und sie zu dem wenigstens einen Bodenbenutzer (RU) über die Satelliten-(SAT)-Nutzlast (TAL) überträgt,
- Übertragen (511), wenn die angeforderten Daten keine populären Daten sind, durch die wenigstens eine Bodenversorgungsstation (SA), der angeforderten Daten zum Benutzer (TU) über die Satelliten-(SAT)-Nutzlast (TAL).

## Claims

1. A telecommunication system comprising:
- at least one feeder ground station (SA) having access to at least one remote server (Svr_Di),
- a satellite (SAT) payload (TAL) configured to establish a first communication link (100, 111) with at least one ground user (TU) and a second communication link (101, 110) with said at least one feeder station (SA),
- at least one high-altitude platform station (SHA) configured to establish a third communication link (130) with the satellite (SAT) payload (TAL) and comprising a cache server (Svr_Ca) comprising a memory (M),
- and at least one gateway ground station (SP) configured to enable communication between said at least one feeder ground station (SA) and said at least one high-altitude platform station (SHA),
- the telecommunication system being configured to save, in the memory (M), data, called popular data, originating from the remote server (Svr_Di) and liable to be requested a plurality of times by at least one user (TU) and to retransmit on request to at least one user (TU) popular data saved in the memory (M).

2. The telecommunication system according to Claim 1, wherein said at least one feeder ground station (SA) is configured:
- to receive at least one request for data from a user (TU),
- to determine whether the requested data are saved in the memory (M) of a cache server (Svr_Ca) of at least one high-altitude platform station (SHA),
- if the requested data are saved in the memory (M), to transmit the request to said at least one high-altitude platform station (SHA),
- if the requested data are not saved in the memory (M), to retrieve the requested data from at least one remote server (Svr_Di) and to determine whether the requested data are popular data,
- if the requested data are popular data, to transmit the requested data to at least one high-altitude platform station, (SHA),
- if the requested data are not popular data, to transmit the requested data to the user (TU) via the satellite (SAT) payload (TAL).

3. The telecommunication system according to one of the preceding claims, wherein said at least one high-altitude platform station (SHA) is configured to receive data to be cached in the memory (M) of the cache server (Svr_Ca), to receive a request for access to data stored in the memory (M) of the cache server (Svr_Ca) and to transmit data stored in the memory (M) of the cache server (Svr_Ca) to at least one ground user (TU) via the satellite (SAT) payload (TAL).

4. The telecommunication system according to one of the preceding claims, wherein the satellite (SAT) payload (TAL) is configured to retransmit, to said at least one feeder station (SA), requests made by ground users (TU), to aggregate data or signals emitted by said at least one feeder station (SA) and by said at least one high-altitude platform station (SHA) and to retransmit, to said users (TU), the aggregated data or aggregated signals.

5. The telecommunication system according to one of the preceding claims, wherein the satellite (SAT) payload (TAL) comprises:
- at least one first receiver (REC₁,..RECₖ) for receiving a signal emitted by said at least one feeder station (SA) and frequency converting the received signal,
- at least one second receiver (ROE) for receiving a signal emitted by said at least one high-altitude platform station (SHA),
- at least one signal-aggregating device (AGR₁,..AGR_{M},..AGRᵢ,..AGR_{i+M}) for frequency multiplexing the signals received by said at least one first receiver (REC₁,..RECₖ) and the signals received by said at least one second receiver (ROE) depending on the frequency at which they are intended to be retransmitted to a ground user (TU),
- at least one emitter (SAU) for retransmitting the signals output from said at least one aggregating device (AGR₁,..AGR_{M},..AGRᵢ,..AGR_{i+M}) to a ground user (TU).

6. The telecommunication system according to any one of claims 1 to 4, wherein the satellite (SAT) payload (TAL) comprises:
- at least one first receiver (DEM₁,...DEMₖ,...DEM_{N}) for receiving data emitted by said at least one feeder station (SA),
- at least one second receiver (ROE, DEMOD)for receiving data emitted by said at least one high-altitude platform station (SHA),
- at least one routing device (RT₁, RT₂) for multiplexing the data received by said at least one first receiver (DEM₁,...DEMₖ,...DEM_{N}) and the data received by said at least one second receiver (ROE, DEMOD) depending on the ground user for whom they are intended,
- at least one signal-aggregating device (AGR₁,..AGR_{M},..AGRᵢ,..AGR_{i+M}) for time-division multiplexing the data originating from said at least one routing device (RT₁, RT₂) and intended for a ground user, and
- at least one emitter (TRANS) for retransmitting the data output from said at least one aggregating device (AGR₁,..AGR_{M},..AGRᵢ,..AGR_{i+M}) to a ground user.

7. The telecommunication system according to one of the preceding claims, wherein said at least one gateway station (SP) and said at least one feeder station (SA) are interconnected by means of a local network (RL) or the Internet (INT).

8. The telecommunication system according to one of the preceding claims, wherein said at least one high-altitude platform station (SHA) and said at least one gateway station (SP) are configured to establish at least one two-way radiofrequency communication link (120, 121).

9. The telecommunication system according one of the preceding claims, wherein said at least one high-altitude platform station (SHA) and the satellite (SAT) payload (TAL) are configured to establish at least one free-space optical communication link (130).

10. The telecommunication system according one of the preceding claims, wherein said at least one feeder ground station (SA) and the satellite (SAT) payload (TAL) are configured to establish at least one radiofrequency two-way communication link (101, 110).

11. The telecommunication system according one of the preceding claims, wherein a stationary high-altitude platform (SHA) is an aerostat equipped with propelling means in order to remain stationary about a specified, nominal and fixed point with respect to the Earth.

12. A method for transmitting data by means of a telecommunication system comprising at least one feeder ground station (SA) having access to at least one remote server (Svr_Di), a satellite (SAT) payload (TAL) configured to establish a first communication link (100, 111) with at least one ground user (TU) and a second communication link (101, 110) with said at least one feeder station (SA), at least one high-altitude platform station (SHA) configured to establish a third communication link (130) with the satellite (SAT) payload (TAL) and comprising a cache server (Svr_Ca) comprising a memory (M), and at least one gateway ground station (SP) configured to enable communication between said at least one feeder ground station (SA) and said at least one high-altitude platform station (SHA), said method comprising the following steps:
- at least one feeder ground station (SA) receives (501) a request for data from a user (TU),
- said at least one feeder ground station (SA) determines (502) whether the requested data are saved in the memory (M) of a cache server (Svr_Ca) of at least one high-altitude platform station (SHA),
- if the requested data are saved in the memory (M), said at least one feeder ground station (SA) transmits (503) the request to said at least one high-altitude platform station (SHA), which transmits (504) the data saved in memory (M) to at least one ground user (TU) via the satellite (SAT) payload (TAL),
- if the requested data are not saved in the memory (M), said at least one feeder ground station (SA) retrieves (505, 506) the requested data from at least one remote server (Svr_Di) and determines (507) whether the requested data are popular data that are liable to be requested a plurality of times by at least one user (TU),
- if the requested data are popular data, said at least one feeder ground station (SA) transmits (509) the requested data to at least one high-altitude platform station (SHA) that caches (510) them in the memory (M) of the cache server (Svr_Ca) and transmits them to at least one ground (TU) user via the satellite (SAT) payload (TAL),
- if the requested data are not popular data, said at least one feeder ground station (SA) transmits (511) the requested data to the user (TU) via the satellite (SAT) payload (TAL).
